Europäisches Patentamt

European Patent Office

Office européen des brevets

(19)

(11) Publication number: **0 052 834**
A2

# (12) EUROPEAN PATENT APPLICATION

(21) Application number: **81109632.0**

(22) Date of filing: **11.11.81**

(51) Int. Cl.³: **G 01 N 31/00**

(30) Priority: **24.11.80 US 209362**

(43) Date of publication of application:
**02.06.82 Bulletin 82/22**

(84) Designated Contracting States:
**DE FR GB**

(71) Applicant: **THE CONTINENTAL GROUP, INC.**
**1 Harbor Plaza**
**Stamford Connecticut 06902(US)**

(72) Inventor: **Gorman, Robert Lee**
**263 Pinehurst Avenue**
**Los Gatos California 95030(US)**

(74) Representative: **Baillie, Iain Cameron et al,**
**c/o Ladas & Parry Isartorplatz 5**
**D-8000 München 2(DE)**

(54) Mechanical peroxide sensor based on pressure measurement.

(57) This application relates to a method and apparatus for determination of the concentration of hydrogen peroxide in a solution. It has been found that the molarity of the peroxide concentration is directly related to the absolute internal pressure within a reaction chamber after the hydrogen peroxide has been completely decomposed. A reaction chamber (21) and catalyst (52) are provided for effecting the controlled and assured decomposition of the hydrogen peroxide, and means (36) are provided for indicating the partial pressure of the resultant oxygen. Several systems are disclosed for introducing controlled samples of the solution into the reaction chamber (21).

FIG. 1

-1-

This invention relates to a method and apparatus for determining the concentration of hydrogen peroxide in a solution.

A particular usage of the invention is with respect to a battery or electrical power generator wherein electrolyte is subject to build-up of hydrogen peroxide which must be maintained within prescribed limits.

This invention is based upon the discovery that when hydrogen peroxide is decomposed in the presence of a catalyst within a confined reaction chamber, the released oxygen results in a pressure increase within the reaction chamber in direct proportion to the molarity of the hydrogen peroxide concentration.

The present invention provides apparatus for determining the concentration of hydrogen peroxide in a solution, characterized by a reaction chamber, a catalyst for decomposing hydrogen peroxide disposed within said reaction chamber, and pressure indicating means coupled to said reaction chamber for indicating the partial pressure of the resultant oxygen and thereby the concentration of hydrogen peroxide in a selected sample.

The present invention also provides a method of determining the concentration of hydrogen peroxide in a solution, said process being characterized by the steps of placing a selected quantity sample of the solution in a reaction chamber, decomposing the hydrogen peroxide in the presence of a catalyst to obtain the reaction $2HO_2 \longrightarrow O_2 +$

20H, and then measuring the partial pressure of the oxygen.

In carrying out the invention a preselected amount of solution (electrolyte) believed to contain a concentration of hydrogen peroxide is placed and is subject to a reaction in the presence of a catalyst until such time as all of the hydrogen peroxide is decomposed. The released oxygen results in a pressure build-up within the confined reaction chamber and by suitably measuring the absolute pressure within the container, such as by way of a pressure transducer, one may directly convert the pressure within the reaction chamber to molarity of the hydrogen peroxide concentration.

In one preferred embodiment, the prescribed amount of the test solution may be placed within the reaction chamber either by way of suitable metering means or by providing a vent port in the reaction chamber at a desired height so that the quantity of the test solution placed within the reaction chamber is automatically controlled by the ullage method.

Preferably, the reaction chamber is cooled utilizing the solution which is being tested so as to maintain a uniformity of temperature within the reaction chamber during the reaction so that an isothermal equilibrium condition will result within a minimal time and that after a time lapse on the order of ten minutes the decomposition of the hydrogen peroxide is completed and the pressure within the reaction chamber has reached a state of equilibrium and may be read to obtain an accurate indication of the molarity of the hydrogen peroxide concentration.

In the simplest form of the invention, the sensor reaction chamber is defined by an elongated length of small diameter pipe which is provided with suitable fittings which permit the introduction of the chamber and the venting and draining of the chamber as well as permitting the coupling of the chamber to a pressure sensor. The pipe and the fittings thereof may form a negative electrode while at least one of the fittings will carry in insulating relation a rod extending into the tube and substantially the full length thereof and forming a positive electrode. In order to hasten the decomposition of the hydrogen peroxide, the positive electrode rod may be surrounded by plural layers of an inner screen which is preferably formed of silver or has a silver coating. The catalyst may also include an outer screen which may have plural layers and is preferably either formed of nickel or has a nickel coating.

The invention will now be described with reference to the accompanying drawings, in which:

Figure 1 is a schematic view showing a sensor system in accordance with this invention wherein a metering pump is provided for accurately placing a test sample within the reaction chamber.

Figure 2 is a vertical sectional view with parts broken away showing the general details of a reaction chamber without cooling means.

Figure 3 is an enlarged transverse sectional view taken generally along the line 3-3 of Figure 2, and shows more specifically the details of the reaction chamber.

Figure 4 is a schematic view similar to Figure 1 and shows the details of a sensor system utilizing a flow meter for placing the sample within the reaction chamber.

Figure 5 is a schematic view similar to Figure 1 and shows a sensor system wherein the sample is placed within the reaction chamber by the ullage injection method.

Figure 6 is a graph showing sensor pressure plotted against decomposition time.

Figure 7 is a graph showing reaction chamber final pressure plotted against peroxide concentration.

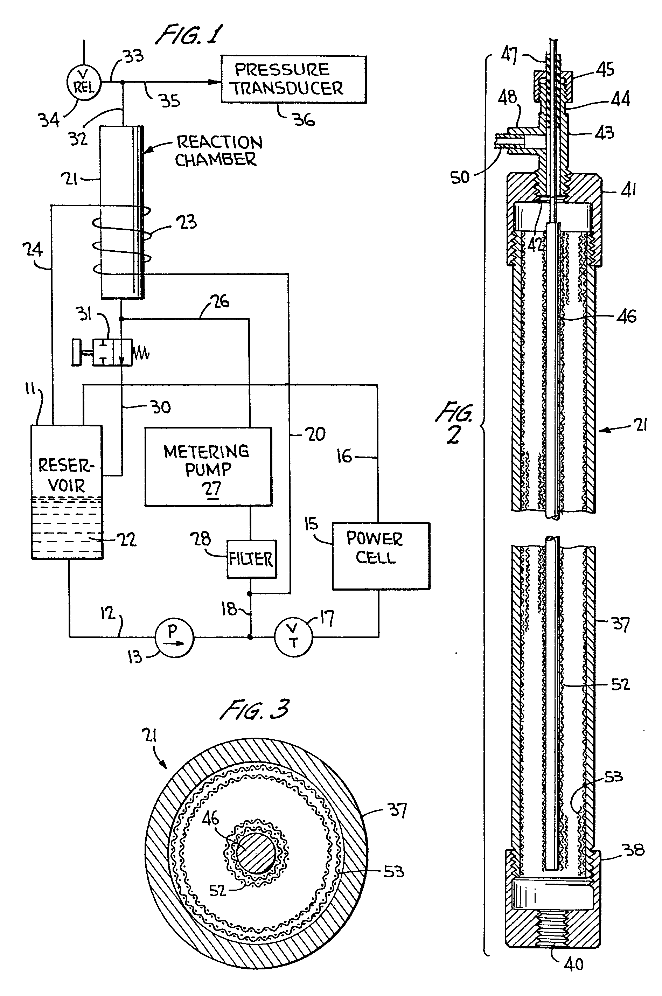

Referring now to Figure 1, it will be seen that there is illustrated a typical hydrogen peroxide sensor system formed in accordance with this invention wherein periodic samples of a circulating electrolyte are tested for hydrogen peroxide concentration. The system, which is generally identified by the numeral 10, includes a reservoir 11 for the electrolyte. A supply line 12 connects a circulating pump 13 to the reservoir 11 with the pump 13 having a discharge line 14 which is coupled to a work unit 15 such as a power cell. A return line 16 connects the work unit to the reservoir 11.

Flow between the pump 13 and the work unit or power cell 15 is controlled by a flow control valve 17 which is mounted within the line 14.

Between the pump 13 and the flow control valve 17, the line 14 has coupled thereto a takeoff line 18 which is further provided with a branch line 20.

The sensor system includes a reaction chamber device 21 in which a sample of the electrolyte is placed for testing to determine the concentration of hydrogen peroxide in the electrolyte which is being circulated, the electrolyte being generally identified by the numeral 22. In order that the reaction chamber may remain at substantially uniform temperature, notwithstanding the heat involved in the decomposition of hydrogen peroxide therein, there are provided thermal conditioning coils 23 which extend about the reaction chamber device 21. The coils 23 receive a portion of the circulating electrolyte through the lines 18 and 20 and are coupled to the reservoir 11 by a return line 24.

It is to be understood that the reaction chamber 21 is to have placed therein a prescribed amount of the electrolyte 22 as a test sample. In order to accomplish this, there is provided at the bottom of the reaction chamber device 21 a combined sample supply line and drain 25 which has coupled thereto a supply line 26 which, in turn, is coupled to a metering pump 27. The pump 27 has coupled thereto the line 18 which, if it is so desired, may have incorporated therein a suitable filter 28.

The line 25 has connected thereto a drain line 30 which returns to the reservoir 11. The line 30 has incorporated therein a solenoid controlled valve 31.

The upper end of the reaction chamber device 21 is also provided with a gas line 32 which is branched and includes a line 33 connected to exhaust and having incorporated therein a pressure relief valve 34. A second line 35 leads to a pressure transducer 36 which may be calibrated to provide a direct reading showing hydrogen peroxide molarity or concentration in terms of resultant absolute pressures.

In accordance with the schematic of Figure 1, during the normal operation of the work unit 15 the pump 15 is actuated constantly to circulate electrolyte from the reservoir 11 through the work unit 15. A portion of the electrolyte pumped by the pump 13 is also circulated about the reaction chamber 21 through the coils 23 to maintain the reaction chamber at a substantially uniform temperature.

When it is desired to test the hydrogen peroxide concentration in the flowing electrolyte, the metering pump 27 is actuated, while the valve 31 is in its closed position so as to introduce a prescribed amount of the electrolyte into the reaction chamber as a test sample. At this time the valve 31 is closed and the valve 34 is open so that the electrolyte cannot drain from the reaction chamber 21 while gas may be vented therefrom so that the gaseous pressure within the reaction chamber may remain at a substantially uniform or constant temperature.

After the sample has been placed within the reaction chamber, the valve 34 is closed as is the valve 31. The hydrogen peroxide is decomposed in the presence of a suitable catalyst, as will be described in detail hereinafter, and the released oxygen will result in a build-up of gaseous pressure within the reaction chamber 21. After a period of approximately ten minutes from the start of the decomposing reaction, the decomposition of the hydrogen peroxide in the test sample has been completed and the pressure is stabilized. A reading indicative of the pressure within the reaction chamber may be obtained from the pressure transducer 36.

It is to be understood that the reaction chamber must be vented and then drained, followed by a suitable airing or otherwise venting of the reaction chamber before the next test can take place.

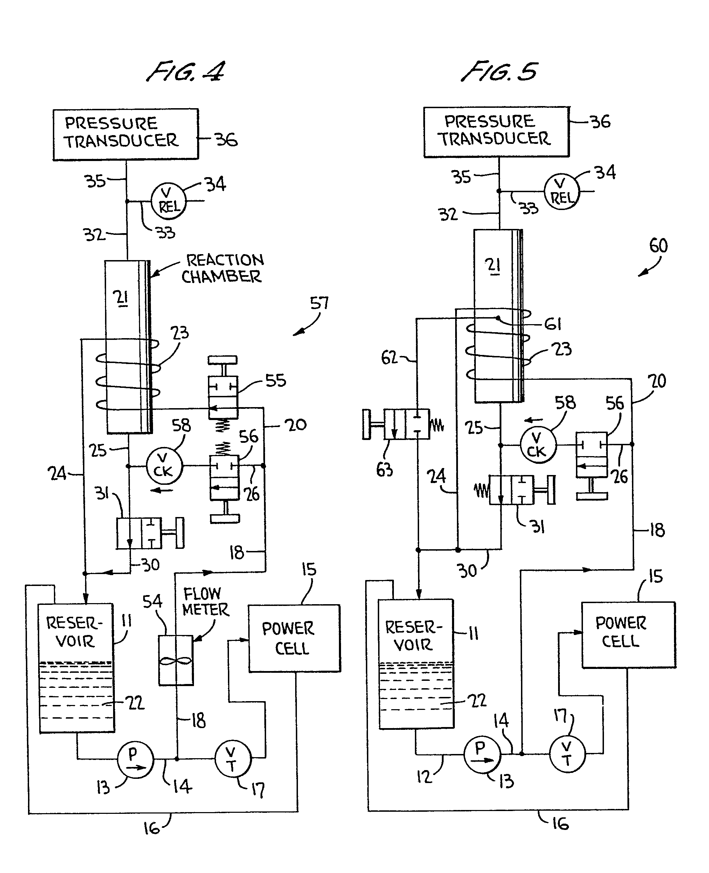

Reference is now made to Figures 2 and 3 wherein the general details of a reaction chamber device, such as the illustrated device 21, are shown. In actuality, a long length of pipe 37 having a diameter of approximately 2.5 cm. was provided with the pipe having its lower end closed by a fitting 38 threaded thereon and having an internally threaded bore 40 for receiving a length of pipe, such as the line or pipe 25 (Figure 4).

The upper end of the pipe 37 is also closed by a fitting 41 which is threaded thereon and which is also provided with an internally threaded bore 42. The bore 42 has threaded therein a T-fitting 43 which includes a first outlet 44 which is in alignment with the tube 37 and which is provided with a suitable cap 45. The cap functions to clamp and maintain in place a positive electrode 46 which is in the form of an elongated rod which is suspended within the pipe 37. The rod 46 has an upper portion thereof disposed within a sleeve 47 of insulating material so as to be electrically insulated from the pipe 37 and the various fittings.

The fitting 43 also includes a right angle outlet 48 which is connected by a line 50 to an electrical pressure sensing unit in the form of a pressure transducer 51 for indicating the absolute pressure within the reaction chamber.

Referring now to Figure 3 in particular, it will be seen that the rod 46, which forms a positive electrode, has extending thereabout part of a catalyst in the form of layers of a screen 52 in electrically conducting relation with respect to the electrode 46. The screen 52 may be in a plurality of layers and is disposed about the electrode 46 in electrical contacting relation. The screen is formed of silver or other suitable catalyst material.

It is to be understood that the pipe 37 forms a negative electrode. The catalyst also includes a negative screen 53 which is disposed about the outer part of the interior of the pipe 37 and preferably is in the form of a plurality of layers and in electrical conducting relation with respect to the pipe 37. The screen 53 is preferably formed of nickel and at a minimum has a nickel surface.

0052834

In the operating device, the electrodes were connected to a 0.3 volt direct current power source although this is not limiting as far as the invention is concerned.

Reference is now made to Figure 4 wherein there is a slightly different arrangement of the components, and in lieu of the metering pump 27 there is a flow meter 54 which is coupled directly in the line 18. Flow through the line 26 is controlled by a normally open control valve 55, and flow into the reaction chamber device 21 is controlled by a normally closed control valve 56 through a check valve 58. The valves 55 and 56, like the other valves, are solenoid controlled valves and are simultaneously actuated. When it is desired to place a sample within the reaction chamber device 21, the valve 55 is closed and the valve 56 is opened. Using the flow meter 54, normally by way of permitting the valve 56 to remain open for a limited period of time, the required sample is placed within the reaction chamber device 21.

The operation of the system of Figure 4, which is generally identified by the numeral 57, is otherwise the same as that of the system 10.

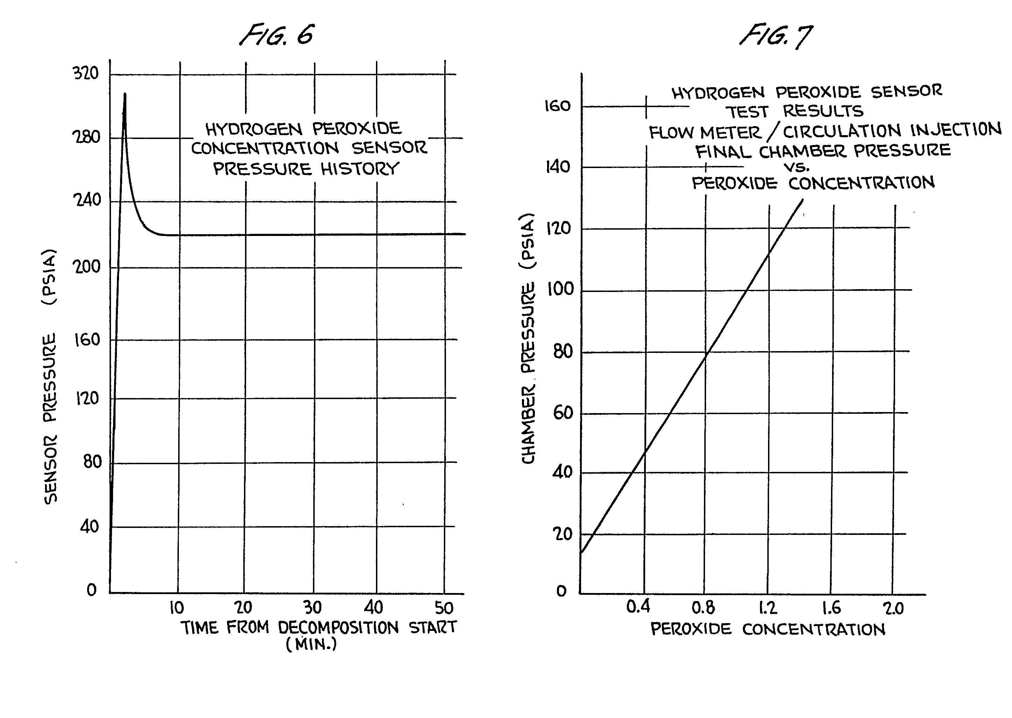

Reference is now made to Figure 5 wherein there is illustrated an ullage injection system 60. The system 60 contains many of the components of the systems 10 and 57, but differs therefrom in that neither a metering pump nor a flow meter is utilized. Instead, the reaction chamber device 21 is provided with an intermediate height vent 61 to which a fill vent line 62 is connected and which line is connected to the return line 30. In addition, the fill line 62 is provided with a normally closed valve 63.

It will be seen that with the valve 31 closed and the valves 56 and 63 open, the reaction chamber of the reaction chamber device 21 may be automatically filled to a predetermined level without requiring either a metering pump or a flow meter. Thus, the ullage injection system 60 is much simpler than the other systems.

It is to be understood that all of the systems 10, 57 and 60 will function in the same manner.

Reference is now made to the graph of Figure 6 wherein it will be seen that during the initial decomposition of the hydrogen peroxide there will be a rapid increase in the absolute pressure within the reaction chamber followed by a rapid drop-off and a rather quick equilibrium of the pressure. It thus will be seen that at a time no greater than ten minutes from the decomposition start, when there is a maintaining of the temperature within the reaction chamber, an isothermal equilibrium pressure will result, and therefore the pressure reading and thus the hydrogen peroxide concentration reading may then be taken with certainty.

Referring now to the graph of Figure 7, it will be seen that the reaction chamber pressure reading which is taken ten minutes from the decomposition start may be plotted against the peroxide concentration in moles and that the graph shows this to be a straight line progression. In other words, the hydrogen peroxide concentration is directly related to the final reaction chamber pressure in pounds per square inch absolute.

The graph of Figure 7 showing direct correlation of peroxide concentration with respect to internal pressure within the reaction chamber has also been proven mathematically. With a reaction chamber volume of 100 $cm^3$ and an injection sample volume of 10 $cm^3$ for the isothermal system it has been found that the molarity of the hydrogen peroxide concentration will be equal to .01747 times the final pressure in the reaction chamber in terms of pounds per square inch absolute.

## CLAIMS

1.  Apparatus for determining the concentration of hydrogen peroxide in a solution, characterized by a reaction chamber (21), a catalyst (52) for decomposing hydrogen peroxide disposed within said reaction chamber (21), and pressure indicating means (36) coupled to said reaction chamber (21) for indicating the partial pressure of the resultant oxygen and thereby the concentration of hydrogen peroxide in a selected sample.

2.  Apparatus according to claim 1, characterized in that said catalyst includes an inner screen (52) having a silver surface.

3.  Apparatus according to claim 2, characterized in that said catalyst includes an outer screen (53) having a nickel surface.

4.  Apparatus according to claim 1, 2 or 3, characterized in that said reaction chamber (21) is defined by an elongated upright tube (37) having a lower end closed by a combined sample inlet and drain fitting (38) and an upper end closed by a fitting (43) defining a combined gaseous pressure connection (48) and a positive electrode (46), said tube (37) being formed of an electrically conductive metal and being a negative electrode.

5.  Apparatus according to claim 4 as dependent on claim 2 or 3, characterized in that said inner screen (52) is coupled to said positive electrode (46).

6.  Apparatus according to claim 4, characterized in that said tube (37) is provided with coolant means (23) for maintaining a test sample at a substantially constant temperature during said decomposing reaction.

7.  A method of determining the concentration of hydrogen peroxide in a solution, said process being characterized by the steps of placing a selected quantity sample of the solution in a reaction chamber, decomposing the hydrogen peroxide in the presence of a catalyst to obtain the reaction $2HO_2 \longrightarrow O_2 + 2OH$, and then measuring the partial pressure of the oxygen.

8.   The method according to claim 7, characterized in that said solution is an electrolyte.

9.   The method according to claim 7 or 8, characterized in that the molar concentration of the hydrogen peroxide is directly proportional to the partial pressure of the oxygen.

10.   The method according to claim 7, 8 or 9, characterized in that said reaction chamber is maintained at a substantially uniform temperature during said reaction such that said reaction is an isothermal reaction.

FIG. 1

V REL  33

32  34  35

PRESSURE TRANSDUCER  36

REACTION CHAMBER

21

23

24

31

26

11

30

RESER-VOIR

22

METERING PUMP 27

20

16

28  FILTER

15  POWER CELL

12  13  P

18  17  V T

FIG. 2

47  45

48  44

43

50  41

42  46

21

37

52

53

38

40

FIG. 3

21

46

52  37

53

## FIG. 4

PRESSURE TRANSDUCER — 36

35

V REL — 34

33

32

REACTION CHAMBER

21

57

23

55

58

V CK

56

20

25

26

24

31

30

18

RESER-VOIR — 11

54

FLOW METER

POWER CELL — 15

22

18

P

13

14

V T

17

16

## FIG. 5

PRESSURE TRANSDUCER — 36

35

32

V REL — 34

33

21

60

61

62

23

58

20

V CK

56

25

63

26

24

31

18

30

RESER-VOIR — 11

POWER CELL — 15

22

14

17

12

P

13

V T

16

FIG. 6

HYDROGEN PEROXIDE
CONCENTRATION SENSOR
PRESSURE HISTORY

SENSOR PRESSURE (PSIA) vs. TIME FROM DECOMPOSITION START (MIN.)

FIG. 7

HYDROGEN PEROXIDE SENSOR
TEST RESULTS
FLOW METER / CIRCULATION INJECTION
FINAL CHAMBER PRESSURE
VS.
PEROXIDE CONCENTRATION

CHAMBER PRESSURE (PSIA) vs. PEROXIDE CONCENTRATION

3 / 3

0052834